# EUROPEAN PATENT APPLICATION

(11) **EP 1 911 796 A1**
(43) Date of publication of application: **16.04.2008**
(21) Application number: 06122203.0
(22) Date of filing: 12.10.2006
(51) Int. Cl.: C08K 3/00, C08L 27/12

(54) **Fluoropolymer composition**

(71) Applicant: Solvay Solexis S.p.A., 20121 Milano (IT)
(72) Inventor: Spadaro, Lorenzo, 98125, MESSINA (IT); Frusteri, Franco, 98127, MESSINA (IT); Di Blasi, Orazio, 98048, MESSINA (IT); Bonura, Giuseppe, 98127, MESSINA (IT); Mezzapica, Aldo, 98125, MESSINA (IT); Troglia, Claudio, 20146, MILANO (IT); Ghielmi, Alessandro, 20149, MILANO (IT)
(74) Representative: Jacques, Philippe

(57) **Abstract**

The invention pertains to a fluoropolymer composition (C) comprising:
- at least one functional fluoropolymer [polymer (I)], said polymer comprising :
- recurring units derived from at least one ethylenically unsaturated monomer comprising at least one fluorine atom (fluorinated monomer, hereinafter); and
- a substantial amount of recurring units derived from at least one ethylenically unsaturated monomer comprising at least one cation exchange group (functional monomer, hereinafter); and
- at least one cerium compound [compound (O)].

Still objects of the invention are a process for the manufacture of said composition and the use of the same as catalyst.

## Description

### Technical Field

Present invention pertains to a fluoropolymer composition useful as catalyst, to a process for its manufacture and to its use as catalyst.

### Background Art

The growing demand for "green" environmental friendly industrial processes requires the development of novel catalysts compatible with such requirements; in particular, acid-catalyzed processes which were traditionally carried out using homogeneous catalysts, i.e. catalysts soluble in the reaction medium, which are generally dangerous and pollutant compounds, difficult to separate from reactants, such as, e.g. HF, sulphuric acid and nitric acid, are intended to be modified so as to make use of heterogeneous catalysts, used in the solid state, which would be easily separated, recovered and recycled.

Among heterogenized catalysts, solid organic polymers able to exchange H⁺ ions (or ionomers, hereinafter), with a wide range of acidity and good thermal stability, represent a valuable alternative to above mentioned homogeneous catalysts.

Reactions wherein ionomers have been shown to be effective are notably: hydration of olefins and epoxides, dehydration of alcohols, alkylation and acylation of aromatic hydrocarbons, isomerization and alkylation of paraffins, nitration of organics, pinacolone rearrangements, esterification of carboxylic acids, hydrolysis of carboxylic acid derivatives, and Diels-Alder condensations.

Functional fluoropolymers, in particular fluoroionomers having sulfonic acid pendant groups, have been shown to possess advantages over other types of acid catalysts in that the fluorocarbon portion gives extraordinary chemical and thermal stability, as well as almost complete insolubility in most systems. Therefore, such polymers can be used as heterogeneous catalyst and can be recovered very easily and reused. Moreover, the acid groups of such fluoropolymers, thanks to the electron-withdrawing effect of fluorinated moieties, exhibit extraordinarily high acid strength compared to corresponding polymers that are not fluorinated.

Functional fluoropolymers can be used either as unsupported or as supported catalysts, and under different forms, e.g. as granular material or as membranes. When catalysts are used as membranes, it is also possible to take benefit of additional advantages, e.g. linked to the separation of the reactants and/or of the products at the opposite side of the membrane, with consequent displacement of reaction equilibriums and increase of kinetics. Should the catalyst be in granular form, it is generally immobilized in the reactor as fixed bed or it can be dispersed in the reactive medium. In said latter circumstance it can be easily separated from the reaction mixture e.g. by filtration. Granular catalysts are generally supported on granular materials, generally inorganic materials, for increasing active surface and modify catalytic behaviour.

The catalytic utility of perfluorinated ion-exchange polymers containing pendant sulfonic acid groups has been broadly reviewed; see OLAH, G.A., et al. Perfluorinated Resinsulfonic Acid (Nafion-(R)-H) Catalysis in Synthesis. Synthesis. 1986, p.513-531. and WALLER, F.J.. Catal. Rev. Sci. Eng.. 1986, vol.28, p.1-12.

Reactions that are catalyzed by functional fluoropolymers generally occur at or near the catalyst surface. The extent to which the reactants can diffuse beneath the surface of the catalyst to contact functional active groups is dependent on several factors, including the polarity of the reaction medium and the equivalent weight of the fluorocarbon polymer. In some instances, portions of the catalyst beneath the surface are inaccessible to the reactants because diffusion is limited, which results in an inefficient use of the polymer. Therefore, to obtain optimum catalytic efficiency, it is desirable to increase the surface area of the catalyst to such a point that reactivity is not limited by diffusion and that all of the functional groups are accessible to the reactants.

It has thus been suggested in the past to support the functional fluoropolymer on suitable inorganic carriers.

Thus, US 2001037045 (E.I. DUPONT DE NEMOURS) 01.11.2001 pertains to a process for the manufacture of a porous microcomposite comprising a perfluorinated ion-exchange polymer comprising pendant sulfonic and/or carboxylic acid groups and an inorganic oxide. The "inorganic oxide" is chosen among metallic, semimetallic or other inorganic oxide compounds, including, for example, alumina, silica, titania, germania, zirconia, alumino-silicates, zirconyl-silicates, chromic oxides, germanium oxides, copper oxides, molybdenum oxides, tantalum oxides, zinc oxides, yttrium oxides, vanadium oxides, and iron oxides. Alumina, silica, titania and zirconia are preferred, and silica is most preferred.

Also, US 2002137626 (E.I. DUPONT DE NEMOURS) 26.09.2002 is related to a catalyst comprising a stationary acid component chosen among, *inter alia,* a perfluorinated ion exchange polymer on an inert support and a mobile acid component. As inert support, silica is preferred but a metal oxide (metallic or semimetallic oxide compounds, including, e.g., alumina, silica, titania, germania, zirconia, alumino-silicates, zirconyl-silicates, chromic oxides, germanium oxides, copper oxides, molybdenum oxides, tantalum oxides, zinc oxides, yttrium oxides, vanadium oxides, and iron oxides) can be substituted in place of the silica.

US 2003176729 (E.I. DUPONT DE NEMOURS) 18.09.2003 discloses porous microcomposites prepared from perfluorinated ion-exchange polymer and metal oxides, said microcomposited possessing high surface area and wide utility as solid acid catalysts. Among suitable metal oxides mention is made of metallic or semi-metallic oxide compounds, including alumina, silica, titania, germania, zirconia, alumino-silicates, zirconyl-silicates, chromic oxides, germanium oxides, copper oxides, molybdenum oxides, tantalum oxides, zinc oxides, yttrium oxides, vanadium oxides, iron oxides.

US 2005245658 (ROCKWELL SCIENTIFIC LICENSING) 03.11.2005 discloses a method of forming nanocomposites useful for magnetic, magnetostrictive, or magnetooptic functionalities, said nanocomposites comprising a wettable polymer having ion-exchangeable groups pendant therefrom and metal oxides trapped within the polymer structure. Typical nanocomposites produced include Fe₂O₃, MnFe₂O₄, CoFe₂O₄, NiFe₂O₄, Ni-Fe alloys and ZnO.

Nevertheless, supported catalysts of the prior art do not satisfy all the requirements for an efficient and economically-viable replacement of traditional homogeneous acid catalysts. In particular functional fluoropolymer resins are generally highly cost materials, so that for them to be used as catalyst components in replacement of low cost inorganic acids with comparable economic impact, high productivities and long life-times are required. Thus, the use of currently available functional fluoropolymer supported catalysts has drawn a limited interest in catalyzing reactions of industrial interest, mainly because supported catalysts therefrom do not provide for sufficiently active catalysts.

There is thus still a need in the art for compositions suitable to be used as catalysts which provides for significant reduction in process hazard and which possess adequate catalytic performances (e.g. catalyst productivity) in reactions of common interest so that their use at the industrial level can be economically acceptable.

### Disclosure of Invention

It is thus an object of the present invention to provide a fluoropolymer composition (C) comprising:
- at least one functional fluoropolymer [polymer (I)]; and
- at least one cerium compound [compound (O)].

The Applicant thinks, without this limiting the scope of its invention, that the use of the cerium compound in combination with the polymer (I) can substantially modify the acidity of the cation exchange group of polymer (I), e.g. by insertion of some fluorine atoms of the carbon chains of polymer (I) into the oxygen vacancy of cerium compound lattice.

Another object of the invention is a process for the manufacture of the fluoropolymer composition (C) as above described.

Still another object of the invention is the use of the composition as above detailed as catalyst.

Within the context of the present invention the mention "at least one functional fluoropolymer (I)" is intended to denote one or more than one polymer (I). Mixtures of polymers (I) can be advantageously used for the purposes of the invention.

In the rest of the text, the expressions "functional fluoropolymer" and "polymer (I)" are understood, for the purposes of the present invention, both in the plural and the singular, that is to say that the inventive composition may comprise one or more than one polymer (I).

To the purpose of the present invention, the term "functional fluoropolymer" is intended to denote any polymer comprising :
- recurring units derived from at least one ethylenically unsaturated monomer comprising at least one fluorine atom (fluorinated monomer, hereinafter); and
- a substantial amount of recurring units derived from at least one ethylenically unsaturated monomer comprising at least one cation exchange group (functional monomer, hereinafter).

The term "at least one ethylenically unsaturated monomer comprising at least one fluorine atom [fluorinated monomer]" is understood to mean that the functional fluoropolymer (I) can comprise recurring units derived from one or more than one fluorinated monomer.

In the rest of the text, the expression "fluorinated monomer" is understood, for the purposes of the present invention, both in the plural and the singular.

The fluorinated monomer can further comprise one or more other halogen atoms (Cl, Br, I). Shall the fluorinated monomer be free of hydrogen atom, it is designated as per(halo)fluoromonomer. Shall the fluorinated monomer comprise at least one hydrogen atom, it is designated as hydrogen-containing fluorinated monomer.

Non limitative examples of fluorinated monomers are notably tetrafluoroethylene (TFE), vinylidene fluoride (VdF), chlorotrifluoroethylene (CTFE), and mixtures thereof.

Optionally, the fluoropolymer may comprise recurring units derived from one first monomer, said monomer being a fluorinated monomer as above described, and at least one other monomer [comonomer (CM), hereinafter]

Hereinafter, the term comonomer (CM) should be intended to encompass both one comonomer and two or more comonomers.

The comonomer (CM) can notably be either hydrogenated (i.e. free of fluorine atom) [comonomer (HCM), hereinafter] or fluorinated (i.e. containing at least one fluorine atom) [comonomer (FCM), hereinafter].

Non limitative examples of suitable hydrogenated comonomers (HCM) are notably ethylene, propylene, vinyl monomers such as vinyl acetate, acrylic monomers, like methyl methacrylate, acrylic acid, methacrylic acid and hydroxyethyl acrylate, as well as styrene monomers, like styrene and p-methylstyrene.

Non limitative examples of suitable fluorinated comonomers (FCM) are notably :
- C₃-C₈ fluoro- and/or perfluoroolefins, such as hexafluoropropene, pentafluoropropylene, and hexafluoroisobutylene;
- C₂-C₈ hydrogenated monofluoroolefins, such as vinyl fluoride;
- 1,2-difluoroethylene, vinylidene fluoride and trifluoroethylene;
- perfluoroalkylethylenes complying with formula CH₂=CH-R_{f0}, in which R_{f0} is a C₁-C₆ perfluoroalkyl;
- chloro- and/or bromo- and/or iodo-C₂-C₆ fluoroolefins, like chlorotrifluoroethylene;
- fluoroalkylvinylethers complying with formula CF₂=CFOR_{f1} in which R_{f1} is a C₁-C₆ fluoro- or perfluoroalkyl, e.g. -CF₃, -C₂F₅, -C₃F₇ ;
- fluoro-oxyalkylvinylethers complying with formula CF₂=CFOX₀, in which X₀ is a C₁-C₁₂ oxyalkyl, or a C₁-C₁₂ (per)fluorooxyalkyl having one or more ether groups, like perfluoro-2-propoxy-propyl;
- fluoroalkyl-methoxy-vinylethers complying with formula CF₂=CFOCF₂ OR_{f2} in which R_{f2} is a C₁-C₆ fluoro- or perfluoroalkyl, e.g. -CF₃, -C₂F₅, -C ₃F₇ or a C₁-C₆ (per)fluorooxyalkyl having one or more ether groups, like -C₂F₅-O-CF₃;
- fluorodioxoles, of formula : 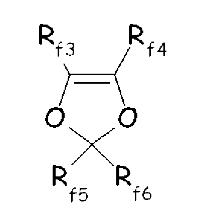
wherein each of R_{f3}, R_{f4}, R_{f5}, R_{f6}, equal or different each other, is independently a fluorine atom, a C₁-C₆ fluoro- or per(halo)fluoroalkyl, optionally comprising one or more oxygen atom, e.g. -CF₃, -C₂F₅, -C₃F₇, -OCF₃, -OCF₂CF₂OCF₃.

The term "substantial amount" in the definition here above is intended to denote an amount of recurring units derived from the functional monomer which is effective to modify the polymer in its properties. Generally, a substantial amount is of at least 1 % by moles, based on the total moles of recurring units.

As used herein, the term "cation exchange group" has its general meaning as intended in organic chemistry and it encompasses atoms or combination of atoms bonded to the carbon skeleton of the ethylenically unsaturated monomer, which confers to said ethylenically unsaturated monomer ability to trap and release (i.e. exchange) cations in a process called ion exchange. Generally cation exchange groups are negatively charged moieties.

The choice of the cation bound to the negatively charged moiety is not critical, for example, cation exchange groups usually come with sodium (Na⁺) or hydrogen (H⁺) ions attached to said exchange sites. Both of these ions have generally low affinities to the sites. It is widely understood that when such exchange sites are exposed to appropriate conditions (e.g. in a reactive environment), cations can be replaced by protons so as to obtain an acid catalysts possessing labile H⁺.

The functional fluoropolymer (I) has preferably linked on its cation exchange groups, hydrogen (H⁺) ions.

Non limitative examples of cation exchange groups are notably those complying with formula :
- -SO₂X, wherein X is chosen among halogens (Cl, FI, Br, I), -O-M⁺, wherein M⁺ is a cation selected among H⁺, NH₄ ⁺, K⁺, Li⁺, Na⁺, or mixtures thereof.
- -COY, wherein Y is chosen among halogens (Cl, Fl, Br, I); -O-M⁺, wherein M⁺ is a cation selected among H⁺, NH₄ ⁺, K⁺, Li⁺, Na⁺; -OR_{Hy} wherein R_{Hy} is a C₁-C₆ hydrocarbon group; -OR_{Hf} wherein R_{Hf} is a C₁-C₆ fluorocarbon or per(halo)fluorocarbon group; -N(R_{Hy*})₂, wherein R_{Hy}*, equal or different at each occurrence, is hydrogen or a C₁-C₆ hydrocarbon group, or mixtures thereof.
- -PO₂Z, wherein Z is chosen among halogens (Cl, FI, Br, I); -O-M⁺, wherein M⁺ is a cation selected among H⁺, NH₄ ⁺, K⁺, Li⁺, Na⁺; -OR_{Hy} wherein R_{Hy} is a C₁-C₆ hydrocarbon group, and -OR_{Hf'} wherein R_{Hf} is a C₁-C₆ fluorocarbon or per(halo)fluorocarbon group, or mixture thereof.

Should the functional monomer comprise [in addition to fluorine atoms optionally comprised in the functional group] at least one fluorine atom which is not comprised in the functional group, it is designated as fluorinated functional monomer. Should the functional monomer be free of fluorine atoms other than those optionally comprised in the functional group, it is designated as hydrogenated functional monomer.

The fluorinated monomer and the fluorinated functional monomer may be the same monomer or may be different monomers, that is to say that the functional fluoropolymer [polymer (I)] can be a homopolymer of a fluorinated functional monomer, or can be a copolymer of one or more than one fluorinated monomer and one or more than one functional monomer, fluorinated or hydrogenated.

Polymer (I) comprises advantageously at least 1 %, preferably at least 2 %, more preferably at least 3 %, even more preferably at least 5 %, by mole of recurring units derived from the functional monomer, based on the total moles of recurring units.

Polymer (I) comprises advantageously at most 75 %, preferably at most 50 %, more preferably at most 30 %, even more preferably at most 20 % by moles of recurring units derived from the functional monomer, based on the total moles of recurring units.

Preferably, the polymer (I) comprises recurring units derived from at least one fluorinated functional monomer chosen among :
**(M1)** sulfonated perfluoroolefin of formula (M1) : 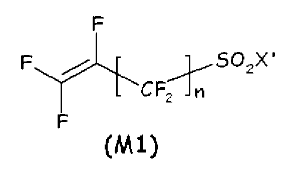 wherein n is an integer between 0 and 6 and X' is chosen among halogens (Cl, Fl, Br, I), -O⁻M⁺, wherein M⁺ is a cation selected among H⁺, NH₄ ⁺, K⁺, Li⁺, Na⁺, or mixtures thereof; preferred sulfonated perfluoroolefin are those complying with formulae (M1-A) and (M1-B) : 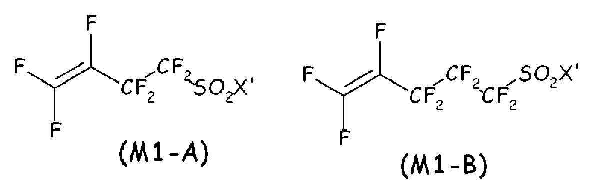 wherein X' has the same meaning as above defined;
**(M2)** sulfonated perfluorovinylethers of formula (M2) : 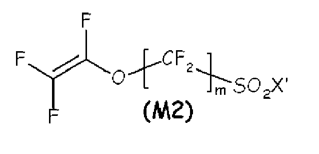 wherein m is an integer between 1 and 10 and X' is chosen among halogens (Cl, Fl, Br, I), -O⁻M⁺, wherein M⁺ is a cation selected among H⁺, NH₄ ⁺, K⁺, Li⁺, Na⁺, or mixtures thereof; preferred are sulfonated perfluorovinylethers of formulae (M2-A), (M2-B) and (M2-C) : 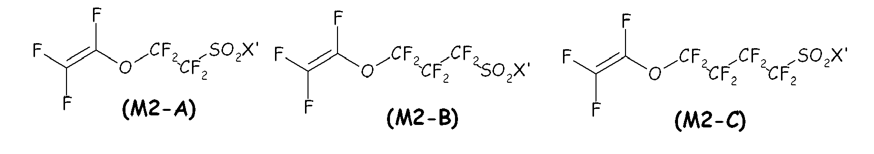 wherein X' has the same meaning as above defined; most preferably, the sulfonated perfluorovinylether is perfuoro-5-sulphonylfluoride-3-oxa-1-pentene (also known as "SFVE") of formula (M2-D) : 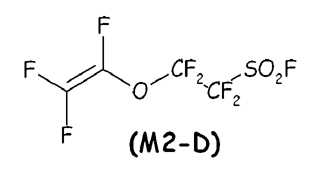 which can be in its -SO₂F form or in any of the -SO₂X' forms, as above detailed.
**(M3)** sulfonated perfluoroalkoxyvinylethers of formula (M3) : 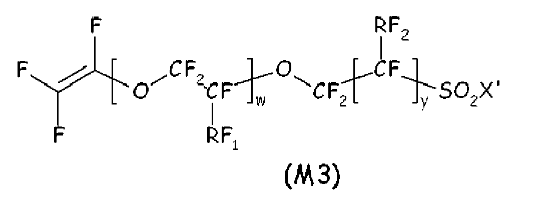 wherein w is an integer between 0 and 2, RF₁ and RF₂, equal or different from each other and at each occurrence, are independently -F, -Cl or a C ₁₋₁₀ perfluoroalkyl group, optionally substituted with one or more ether oxygens, y is an integer between 0 and 6 and X' is chosen among H, halogens (Cl, Fl, Br, I), -O⁻M⁺, wherein M⁺ is a cation selected among H⁺, NH₄ ⁺, K⁺, Li⁺, Na⁺, or mixtures thereof; preferably X' is fluorine; preferred sulfonated perfluoroalkoxyvinylether complies with formula (M3) here above, wherein w is 1, RF₁ is -CF₃, y is 1 and RF₂ is -F and X' is F [formula (M3-A), also called "PSEPVE"
   (perfluoro-2-(2-fluorosulfonylethoxy)propylvinyl ether)]: 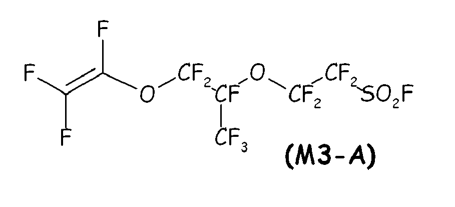 which can be in its -SO₂F form or in any of the -SO₂X' forms, as above detailed.
**(M4)** perfluoroalkoxyvinylether carboxylates of formula (M4) : 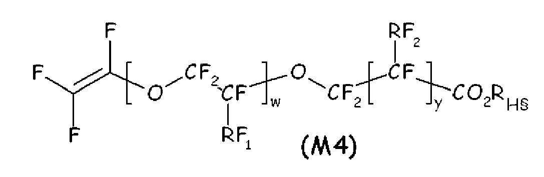 wherein w, y, RF₁ and RF₂ have the same meaning as above defined, and
   R_{H§} is a C₁₋₁₀ alkyl or fluoroalkyl group; preferred perfluoroalkoxyvinylether carboxylate complies with formula (M4) here above, wherein w is 0, y is 2, R_{H§} is methyl and RF₂ is -F [formula (M4-A)] : 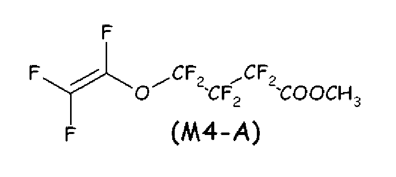
**(M5)** sulfonated aromatic (per)fluoroolefins of formula (M5): 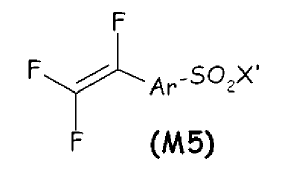 wherein Ar is a C₃₋₁₅ aromatic or heteroaromatic moiety and X' is chosen among halogens (Cl, Fl, Br, I), -O⁻M⁺, wherein M⁺ is a cation selected among H⁺, NH₄ ⁺, K⁺, Li⁺, Na⁺, or mixtures thereof; and
**(M6)** mixtures thereof.

Optionally, in addition to recurring units derived from fluorinated monomer(s) and functional monomer(s) as above specified, the polymer (I) can further comprise recurring units derived from bis-olefins of formula : 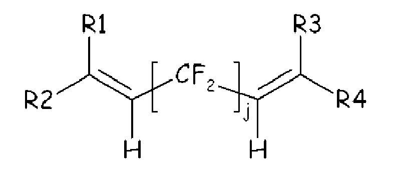 wherein j is an integer between 2 and 10, preferably between 4 and 8, and R, R2, R3, R4, equal or different from each other, are H or C₁₋₅ alkyl or fluoroalkyl groups.

Should the polymer (I) comprise recurring units derived from a bis-olefin as above define, it advantageously comprises said recurring units in an amount in the range from 0.01 to 5 % by moles, with respect to all recurring units of polymer (I).

Preferably, the polymer (I) is free from recurring units derived from bis-olefins as above specified.

The polymer (I) is preferably a functional per(halo)fluoropolymer.

For the purpose of the invention, the term "functional per(halo)fluoropolymer" is intended to denote a functional fluoropolymer substantially free of hydrogen atoms.

The term "substantially free of hydrogen atom" is understood to mean that the functional per(halo)fluoropolymer consists essentially of :
- recurring units derived from one or more than one ethylenically unsaturated monomer comprising at least one fluorine atom and free from hydrogen atoms (per(halo)fluoromonomer, hereinafter); and
- recurring units derived from one or more than one ethylenically unsaturated monomer comprising at least one fluorine atom and at least one cation exchange group, and free from hydrogen atoms (except those optionally comprised in the cation exchange group) (functional per(halo)fluoromonomer, hereinafter).

The per(halo)fluoromonomer and the functional per(halo)fluoromonomer may be the same monomer or may be different monomers, that is to say that the functional per(halo)fluoropolymer can be a homopolymer of a functional per(halo)fluoromonomer, or can be a copolymer of one or more than one per(halo)fluoromonomer and one or more than one functional per(halo)fluoromonomer.

Preferred polymer (I) is chosen among functional per(halo)fluoropolymers comprising (preferably consisting essentially at) recurring units derived from at least one functional per(halo)fluoromonomer and at least one per(halo)fluoromonomer chosen among :
- C₃-C₈ perfluoroolefins, preferably tetrafluoroethylene (TFE) and/or hexafluoropropylene (HFP);
- chloro- and/or bromo- and/or iodo-C₂-C₆ per(halo)fluoroolefins, like chlorotrifluoroethylene (CTFE) and/or bromotrifluoroethylene;
- perfluoroalkylvinylethers (PAVE) complying with formula CF₂=CFOR_{f1} in which R_{f1} is a C₁-C₆ perfluoroalkyl, e.g. -CF₃, -C₂F₅, -C₃F₇;
- perfluoro-oxyalkylvinylethers complying with formula CF₂=CFOX₀, in which X₀ is a C₁-C₁₂ perfluorooxyalkyl having one or more ether groups, like perfluoro-2-propoxy-propyl.

More preferred polymer (I) is chosen among tetrafluoroethylene (TFE) copolymers comprising (preferably consisting essentially at) recurring units derived from at least one functional per(halo)fluoromonomer as above defined.

Preferred functional per(halo)fluoromonomer are notably sulfonated perfluorovinylethers of formula (M2) as above detailed and sulfonated perfluoroalkoxyvinylethers of formula (M3) as above detailed, and mixtures thereof.

Even more preferred polymer (I) is selected among TFE copolymers comprising (preferably consisting essentially at) recurring units derived from PSEPVE (formula M3-A here above) and/or SFVE (formula M2-D here above), in their -SO₂F or -SO₂X" form, wherein X" is chosen among halogens (Cl, Br, I), -O⁻M⁺, wherein M⁺ is a cation selected among H⁺, NH₄ ⁺, K⁺, Li⁺, Na⁺, or mixtures thereof; preferably in their -SO₃H form.

Still more preferred polymer (I) is selected among TFE copolymers comprising (preferably consisting essentially at) :
- from 5 to 20 % by moles of recurring units derived from PSEPVE and/or SFVE, in their -SO₂F or -SO₂X" form, wherein X" is chosen among halogens (Cl, Br, I), -O⁻M⁺, wherein M⁺ is a cation selected among H⁺, NH₄ ⁺, K⁺, Li⁺, Na⁺, or mixtures thereof; preferably in their -SO₃H; and
- from 95 to 80 % by moles of recurring units derived from TFE.

According to a preferred embodiment of the invention, the polymer (I) is chosen among TFE copolymers as above described wherein the functional monomer is SFVE, in its -SO₂F or -SO₂X" form, wherein X" is chosen among halogens (Cl, Br, I), -O-M⁺, wherein M is a cation selected among H ⁺, NH₄ ⁺, K⁺, Li⁺, Na⁺, or mixtures thereof; preferably in its -SO₃H form.

It has been surprisingly found that the compositions according to this preferred embodiment of the invention possess improved catalytic behaviour when used as acid catalysts, e.g. in the dimethylether synthesis by methanol dehydration.

Within the context of the present invention the mention "at least one cerium compound" is intended to denote one or more than one compound (O). Mixtures of compounds (O) can be advantageously used for the purposes of the invention.

In the rest of the text, the expressions "Cerium compound" and "compound (O)" are understood, for the purposes of the present invention, both in the plural and the singular, that is to say that the inventive composition may comprise one or more than one compound (O).

The term cerium compound is intended to denote any compound comprising at least one atom of Cerium, irrespective of its valence state.

Thus, the cerium compound can comprise Ce in either trivalent or tetravalent state; also it can comprise mixtures of Ce(III) and Ce (IV).

Compound (O) is advantageously chosen among cerium oxides [CeO₂; Ce ₂O_{3]}, ceric fluoride (CeF₄), ceric sulphate [Ce(SO₄)₂], ceric ammonium nitrate {(NH₄)₂[Ce(NO₃)₆]}, ceric ammonium sulphate {(NH₄)₂[Ce(SO₄)₃]}, ammonium hexachlorocerate {(NH₄)₂[CeCl₆]}, basic cerous carbonate [Ce(OH)CO₃], cerous hydroxide [Ce(OH)₃], cerous carbonates [Ce₂(CO₃)₃·*n*H₂O], cerous oxy-carbonate [Ce₂O₂(CO₃)], cerous phosphate, cerous fluoride [CeF₃], cerous oxyfluoride [CeOF], cerous sulphate [Ce₂(SO₄)₃], cerium sulphide [Ce₂S₃], cerium oxysulfide [Ce₂O₂S], cerous nitrate [Ce(NO₃)₃·6H₂O], cerous chloride [CeCl₃], cerous oxychloride [CeOCl], cerous bromide [CeBr₃], and mixture thereof.

Preferred cerium compound is chosen among cerium oxides, i.e. among CeO₂ (ceria), Ce₂O₃, and mixtures thereof.

Preferably the compound (O) comprises Cerium in the tetravalent state.

Still more preferably the compound (O) is ceria.

The cerium compound can act in the composition as a carrier, being generally the major inorganic component of the composition (C) or can be used as promoter, in addition to other inorganic carrier/promoters, being present in limited amount.

The amount of cerium compound (O) in the composition will be advantageously chosen according to the function this compound shall play in the composition.

According to a first embodiment of the invention, Cerium compound (O) will be generally used in the composition in an amount of advantageously at least 50 wt.%, preferably of at least 60 wt.%, more preferably at least 70 wt.%, with respect to the total weight of the composition (C ). Maximum amount of cerium compound will not be particularly limited; generally its amount will be of advantageously at most 95 wt. %, preferably of at most 90 wt. %, more preferably of at most 85 wt. %.

Cerium compound is generally used in the composition according to this first embodiment of the invention as carrier, as major inorganic component of the composition (C).

According to a second embodiment of the invention, the cerium compound will be present in the composition in an amount of advantageously at least 3 wt. %, preferably of at least 5 wt. %, more preferably of at least 7 wt. % and of advantageously at most 40 wt. %, preferably at most 35 wt. %, more preferably at most 30 wt. %.

The cerium compound (O) is generally used in the composition according to this second embodiment of the invention in combination with other inorganic carrier/promoters.

The amount of the functional fluoropolymer (I) in the composition (C) is not limited. Nevertheless, to obtain compositions which can behave as active catalysts, it is understood that the fluoropolymer composition (C) should comprise the polymer (I) in an amount of advantageously at least 1 wt.% , preferably at least 5 wt. %, more preferably at least 7 wt. %, based on the total weight of the composition. Also, in order to maximize polymer (I) productivity, it is generally recommended to limit the functional fluoropolymer content of the composition, so as to avoid loss of productivity due to undesired inaccessibility of polymer (I) active sites. Thus, the fluoropolymer composition (C) will generally comprise the polymer (I) in an amount of at most 40 wt.%, preferably at most 35 wt.%, more preferably at most 30 wt.% wt, based on the total weight of the composition.

The skilled in the art will select, as a matter of routine work, the precise polymer (I) load as a function, notably, of the nature and concentration of cation exchange groups in the polymer (I) (active sites) and of the reaction and conditions in which the composition shall be employed as a catalyst.

Good results have been obtained with compositions having a polymer (I) content of 5 to 30 wt.%, based on the total weight of the composition.

According to a preferred embodiment of the invention, the composition comprises the functional fluoropolymer [polymer (I)] in an amount of from 7 to 15 wt. %, preferably of from 9 to 13 wt. %.

The composition (C) can be provided under different forms. For instance, it can be provided under the form of powder, i.e. of discrete solid particles, under the form of shaped three-dimensional forms (e.g. extrudates, pellets) or can be shaped to yield self-standing membranes, with or without the use of suitable support polymeric materials.

Should the composition be under the form of powder, it generally has an average particle size of 1 to 10000 µm, preferably from 5 to 5000 µm.

Selection of this range of particle size is particularly advantageous with the aim of maximizing surface area and still having a material easy to handle and which do not generate difficulties of separation in gas/solid reactions (e.g. in suspended bed reactions).

The composition (C) can further comprise, in addition to polymer (I) and compound (O), additional components.

For instance, the composition (C) can comprise one or more of the usual additive and fillers used in combination with the functional fluoropolymer [polymer (I)]. Mention can be notably made of processing aids, pigments, filling materials, electrically conductive particles, lubricating agents, heat stabilizer, anti-static agents, extenders, reinforcing agents, organic and/or inorganic pigments like TiO₂, carbon black, acid scavengers, such as MgO, flame-retardants, smoke-suppressing agents and the like.

By way of non-limiting examples of filling material, mention may be made of mica, alumina, talc, carbon black, glass fibers, carbon fibers, graphite in the form of fibers or of powder, carbonates such as calcium carbonate, macromolecular compounds and the like.

As lubricating agents we can notably mention graphite, perfluorinated polymers, such as PTFE, silicone oil and the like.

According to a preferred embodiment of the invention, the composition (C) comprises at least one carrier/promoter chosen among metallic or semi-metallic oxide compounds different from the cerium compound [compound (Y)]; said carrier/promoter is preferably chosen among alumina, silica, titania, germania, zirconia, alumino-silicates, zirconyl-silicates, chromic oxides, germanium oxides, copper oxides, molybdenum oxides, tantalum oxides, zinc oxides, yttrium oxides, vanadium oxides, iron oxides and mixtures thereof. Compound (Y) preferably comprises silica, titania, and/or zirconia.

The Applicant thinks, without this limiting the scope of its invention, that the proper combination of the cerium compound with one or more than one metallic or semi-metallic oxide compound can substantially modify the surface properties of the composition, advantageously enabling improved accessibility of the polymer (I) active sites.

Another object of the invention is a process for the manufacture of the fluoropolymer composition (C) as above described.

According to a first embodiment, the process of the invention advantageously comprises contacting:
- at least one functional fluoropolymer [polymer (I)]; and
- at least one cerium compound [compound (O)]
so as to obtain a mixture (M) comprising polymer (I) and compound (O).

According to this embodiment, the compound (O) is advantageously brought into contact with the polymer (I) while being in the solid state, preferably under the form of solid particulate.

The compound (O) may thus be used notably in the form of free-flowing powder, well-suited e.g. for fluidized bed operations, in the form of granulates, suitable e.g. for operations in fixed-bed reactors.

The compound (O) and the polymer (I) are generally contacted in the presence of a suitable liquid medium.

The choice of this liquid medium is not critical. It is preferred that the po lymer (I) forms stable dispersions in said liquid medium and that the surface of the compound (O), used in solid form, has sufficient affinity towards said liquid medium.

The liquid medium is generally an aqueous or aqueous alcoholic medium, i.e. a medium comprising water or comprising a mixture of water and an aliphatic alcohol. Preferred alcohols are notably methanol, ethanol, isopropanol, n-propanol, n-butanol, iso-butanol, ter-butanol and the like. Ethanol is preferred.

According to a first variant, the process yields a composition (C) free from compound (Y), as above detailed. In such a variant, it is preferred to:
(i) add to the compound (O) an amount of liquid medium comprising polymer (I) so as to fill the porosity of compound (O);
(ii) submitting the mixture (M) to drying for eliminating the liquid medium; and
(iii) repeating step (i) and (ii) here above until the required amount of polymer (I) has been added.

According to a second variant of this embodiment, the process yields a composition comprising at least one compound (Y) as above detailed.

Should the composition (C) further comprise at least one compound (Y) as above detailed, one or more than one compound (Y) as above detailed or a precursor thereof may be also added to the mixture (M) in the liquid medium.

Preferably, a precursor of compound (Y) is mixed with the compound (O).

The term "precursor of compound (Y)" is intended to denote, to the purpose of the present invention, any compound which can be transformed in a metallic or semi-metallic oxide compound, as above detailed, under suitable reaction conditions, e.g. by hydrolysis, dehydration, decarboxylation, oxydation, calcination, and the like.

Generally, a precursor of compound (Y) which is at least partially soluble in the liquid medium will be preferred.

The term "soluble" as used herein means that said precursor can be completely solubilized in the liquid medium when used in the required amounts; it is also understood that reactions involving said precursor might immediately lead to insoluble compounds.

Suitable conditions are generally set in the process according to this second variant, so as to advantageously effect precipitation of the compound (Y) and polymer (I) onto the solid, pre-formed compound (O), by e.g. pH tuning, temperature adjusting.

For instance, should the compound (Y) comprise silica, suitable precursors can be chosen among silicon tetrahalide (e.g. SiCl₄) or (halo)(hydrogeno)(alkyl)-silanes (e.g. methyltrichlorosilane, trichlorosilane, etc.), alkali silicate solutions (in particular mixtures of sodium silicate and sulphuric acids), alkyl orthosilicates (also known as silicate esters) (e.g. tetraethyl-orthosilicate, tetramethyl-orthosilicate) and the like.

Also, should the compound (Y) comprise titania, suitable precursors can be chosen among titanium halides, like titanium tetrachloride; titanium oxy-halides like TiOCl₂, titanium oxy-compounds, e.g. titanyl salts, such as titanyl sulphate (TiOSO₄), titanium alkoxides, like titanium tetra-methoxide, titanium tetra-ethoxide, titanium tetra-allyloxide, titanium tetra-*n*-butoxide, titanium tetra-benzyloxide, titanium tetra-*n*-octyloxide, titanium tetra-2-ethylhexyl-oxide and titanium tetra-isooctyloxide; titanium alkoxy-halides having the formula Ti(OR) *ₙ*X_{4-*n*} where R may be alkyl, alkenyl, or aryl, and X is F, Cl, Br, or I and n is an integer from 1 to 3; titanium hydroxycarboxylic acid complexes, like titanium lactate and titanium bis-ammonium lactate dihydroxide ; alkaline-stable ammonium or metal titanium tartrates, malates and citrates, like M*_{y}*TiO(citrate)*ₓ*, where M is NH₄, Na, K, Ca, or Ba and x and y are independently an integer chosen for satisfying neutrality; titanium β-diketone chelates, like Ti(acac)₂ (X)₂, where acac is the acetylacetonate ligand and X is methoxy, ethoxy, isopropoxy, *n*-butoxy, or chloro; metal titanates, like Na₂TiO₃, Na₄TiO₄·0.32 H₂O, Na₂TiO₃·1.45 H₂O, Li₂TiO₃, K₂TiO₃, CaTiO₃, SrTiO₃, BaTiO₃.

Also, should the compound (Y) comprise zirconia, suitable precursors can be chosen among zirconium halides (e.g. ZrCl₄), zirconium oxyhalides, (e.g. zirconium oxychloride), zirconium alkoxides having the general formula ZrX_{4-*n*}(OR)*ₙ*whrein R is an alkyl group, alkyl- or aryl-zirconium organometallic compounds (e.g. tetramethyl zirconium), and the like.

The mixture (M) is generally worked up for obtaining the fluoropolymer composition (C) by conventional separation (e.g. filtration, decantation, ...), drying and calcination steps.

According to a second embodiment, the process of the invention advantageously comprises contacting:
- at least one functional fluoropolymer [polymer (I)]; and
- at least one precursor of a cerium compound [compound (O)]
so as to obtain a mixture (M') comprising polymer (I) and precursor of compound (O).

Generally, the process according to this embodiment is particularly suitable for manufacturing compositions (C) wherein the cerium compound (O) is used in combination with other inorganic carrier/promoters.

In such a case, the cerium compound (O) acts generally as a dopant of another inorganic carrier/promoter.

In the process according to the second embodiment of the invention, generally one or more than one metallic or semi-metallic oxide compound different from the cerium compound [compound (Y)] is added to the mixture (M').

A liquid medium, as above detailed, is generally added. It is preferred for the precursor of compound (O) to be at least partially soluble in said liquid medium.

The term "precursor of compound (O)" is intended to denote, to the purpose of the present invention, any compound which can be transformed in the targeted compound (O), as above detailed, under suitable reaction conditions, e.g. by hydrolysis, dehydration, decarboxylation, oxydation, calcination, and the like.

The compound (Y) is added to the mixture (M) while being in the solid state, preferably under the form of solid particulate, as above detailed.

For instance, a pre-formed silica carrier can be contacted in a suitable liquid medium with a polymer (I) and a soluble cerium salt so as to obtain a composition (C).

The mixture (M') is generally worked up for obtaining the fluoropolymer composition (C) by conventional separation (e.g. filtration, decantation, ...), drying and calcination steps.

Still another object of the invention is the use of the composition as above detailed as catalyst.

The composition of the invention can be used as catalyst for alkylating aliphatic or aromatic hydrocarbons, such as the alkylation of naphthalene with propylene; for decomposing organic hydroperoxides, such as cumene hydroperoxide; for sulfonating or nitrating organic compounds; for oxyalkylating hydroxylic compounds, for the hydrocarbon isomerization and polymerization reactions, such as the isomerization of 1 -butene to 2-butenes; for carbonylation and carboxylation reactions; for hydrolysis and condensation/dehydration reactions; for esterifications and etherifications; for hydrations and oxidations; for oligomerizations; for aromatic acylation; for aromatic benzylation; and for isomerization and metathesis reactions.

A reaction wherein the composition (C) has found itself particularly advantageous is the dehydration of methanol for yielding dimethyl ether.

When used as a catalyst, the composition (C) is contacted with the required reactants in a fixed-bed system, a moving-bed system, a fluidized-bed system, or in a batch-type operation. This contacting can be in the liquid phase, a mixed vapour-liquid phase, or a vapour phase. Inert diluents such as helium, nitrogen, argon, methane, ethane and the like can be notably present.

Reaction conditions using the present composition (C) as catalyst comprise reaction temperatures generally in the range of about 0°C to about 300°C, preferably from about 24°C to about 250°C. Pressure can range from ambient for gas phase or a pressure sufficient to keep reaction in the liquid phase. Reactor operating pressures usually will range from about one atmosphere to about 100 atmospheres, preferably from about one atmosphere to about 50 atmospheres. The skilled in the art will chose appropriate conditions as a matter of routinely work in view of the reaction to be carried out.

Should the composition (C) be used as catalyst in a process operated in continuous, the amount of catalyst in the reactor will provide an overall weight hourly space velocity (WHSV) of from about 0.1 to 100 hr⁻¹, preferably from about 0.1 to 10 hr⁻¹; most preferably 0.1 to 2 hr⁻¹.

In batch processes, short contact times ranging from about 0.01 hr to about 10 hrs can give satisfactory results; preferably 0.1 hr to about 5 hrs can be used with the present composition (C), thanks to its high activity. Contact time may be reduced further at higher temperatures.

The present invention will be now described in more details by reference to the following examples, whose purpose are merely illustrative and do not limit the scope of the present invention.

EXAMPLES

**Raw materials**

SiO₂: Fumed silica commercially available from Cabot Corporation under the trade name Cab-O-Sil^{®} LM-50, having a S.A. of 120 m²/g.

CeO₂: Ceria (Cerium oxide) powder commercially available from Sigma-Aldrich, having a purity of 99.9 % and a S.A. of 15 m²/g. Commercial sample was pre-treated in air at 300°C for 3 hours before use for compositions manufacture.

SAC-13: Fluorosulfonic acid NAFION^{®} polymer on amorphous silica, (porous nanocomposite), commercially available from Aldrich, having >0.6 mL/g pore volume, with ~10 nm pore diameter and a surface area of ~ 200 m²/g, and containing ~ 13% wt of NAFION^{®} polymer.

N_ion: hydroalcoholic dispersion (5 wt. %) of NAFION^{®} polymer of formula: 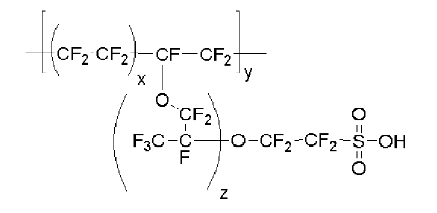 having equivalent weight of 1100, commercially available from Aldrich.

H_ion_1: liquid dispersion (5 wt. %) of HYFLON^{®} Ion, commercially avail able from Solvay Solexis S.p.A., having equivalent weight of 810.

H_ion_2: liquid dispersion (5 wt. %) of HYFLON^{®} Ion polymer (see above) commercially available from Solvay Solexis S.p.A., having equivalent weight of 730.

Si(EtO)₄: tetraethylorthosilicate solution commercially available from Carlo Erba products, having purity of 99.9 %

ZrO(NO₃)₂: Zirconyl nitrate solution commercially available from Sigma-Aldrich.

**Preparation and characterization of fluoropolymer compositions comprising N ion**

Compositions Naf_1, Naf_2, Naf_3 and Naf_4 were synthesized by incipient wetness impregnation of pre-formed carrier oxide powders.

Naf_1, Naf_2, Naf_3 and Naf_4 catalysts were prepared by the stepwise addition of the commercial N_ion dispersions to commercial SiO₂ and CeO ₂ powder samples (see Table 1). Before the impregnation, all supports (SiO₂ and CeO₂) were treated in air at 573K, while N_ion solution was further diluted in absolute ethanol. Then, aliquots of the ethanol diluted N_ion solution were added to supports (SiO₂ and CeO₂) until incipient wetness was obtained; subsequently, the materials were dried at 333K for 30 minutes. This procedure was repeated until the designed amount of polymer was loaded on supports. As example, for the preparation of one gram of "**Naf_4**" composition (13 wt.% of N_ion polymer loading), 2.60 g of N_ion solution was diluted in 40mL of absolute ethanol and stepwise added to 0.87g of SiO₂ powder. After deposition all samples were treated in air at 393K for 2 hours.

Surface area (S.A.) of so obtained composition was determined by B.E.T. method according to ISO 9277 standard, using nitrogen, using a Micromeritics mod. ASAP 20-10 instrument; samples were pre-conditioned at 403K under vacuum until residual pressure of less than 10⁻² mbar before measurements.

Functional fluoropolymer loads were determined by thermogravimetric analysis, according to ISO 11358 standard, using a STA 414/2 NETZSCH Simultaneous Thermal Analysis Instrument.

Properties of the obtained compositions are detailed in table 1 hereinafter:

**Table 1**

| i.d. | Active phase | | carrier | | S.A.^{a} (m²/g) | <D>^{b} (nm) |
|---|---|---|---|---|---|---|
| | type | load | type | amount | | |
| Naf_1 | N_ion | 26.0 % | CeO₂ | 74.0% | 20 | 5 |
| Naf_2 | N_ion | 10.0 % | CeO₂ | 90.0% | 20 | 5 |
| Naf_3 (comp) | N_ion | 30.0 | SiO₂ | 70.0% | 120 | 15 |
| Naf_4 (comp) | N_ion | 13.0 | SiO₂ | 87.0% | 120 | 15 |

a: Surface area (S.A.) of so obtained compositions were determined by isothermal physisorption of nitrogen at 77K using B.E.T. method according to ISO 9277 standard. Measurements were carried out using a Micromeritics mod. ASAP 20-10 instrument; before analysis all samples were pre-conditioned at 403K under vacuum until residual pressure of less than 10⁻² mbar; b: average pore diameter determined by capillary condensation of N₂, according to B.J.H calculation model.

**Preparation and characterization of fluoropolymer compositions comprising H ion**

Compositions Hyf_1 to Hyf_5 were synthesized by incipient wetness impregnation of pre-formed carrier oxide powders.

HyC_1, Hyf_2, Hyf_3, Hyf_4 and Hyf_5 catalysts were prepared by the stepwise addition of either H_ion_1 or H_ion_2 liquid dispersions to commercial SiO₂ and CeO₂ powder samples (see Table 2). Before the impregnation, all supports (SiO₂ and CeO₂) were treated in air at 573K, while Hyflon^{®} Ion perfluorosulfonic acid polymer dispersions were diluted in absolute ethanol. Then, aliquots of the ethanol diluted H_ion_1 or H_ion_2 dispersion were added to supports (SiO₂ and CeO₂) until incipient wetness was obtained; subsequently, the materials were dried at 333K for 30 minutes. This procedure was repeated until the target amount of polymer was loaded on the support. As example, for the preparation of one gram of "**Hyf_2**" composition (16 wt.% of H_ion_2 polymer loading), 3.20g of H_ion_2 dispersion was diluted in 40mL of absolute ethanol and stepwise added to 0.84 g of CeO₂ powder. After deposition, all the samples were treated in air at 393K for 2 hours.

Properties of the obtained compositions are detailed in table 2 hereinafter:

**Table 2**

| i.d. | Active phase | | carrier | | S.A.^{a} (m²/g) | <D>^{b} (nm) |
|---|---|---|---|---|---|---|
| | type | load | type | amount | | |
| Hyf_1 | H_ion_2 | 10.5 % | CeO₂ | 89.5% | 20 | 5 |
| Hyf_2 | H_ion_2 | 16.2 % | CeO₂ | 83.8% | 20 | 5 |
| Hyf_3 | H_ion_2 | 24.2 % | CeO₂ | 75.8 % | 20 | 5 |
| Hyf_4 (comp) | H_ion_1 | 12.0 % | SiO₂ | 88.0% | 120 | 15 |
| Hyf_5 (comp) | H_ion_1 | 24.0 % | SiO₂ | 76.0 % | 120 | 15 |

a: Specific Surface Area determined by N₂ physisorption according to B.E.T. method; determinations have been carried out on samples pre-conditioned under vacuum at 403K until a residual pressure of less than 10⁻² mbar; b: average pore diameter determined by capillary condensation of N₂, according to B.J.H calculation model.

**Preparation and characterization of a fluoropolymer composition comprising H ion and mixed carriers**

Composition Hyf_6 was prepared by adsorption-precipitation of silica and zirconia from, respectively, tetraethyl-orthosilicate and zirconyl nitrate in the presence of pre-formed cerium oxide particles and H_ion_2.

Thus, for the preparation of 5 g of "**Hyf_6**" composition, 300mL of diluted sulforic acid [10⁻³M], 13 g of H_ion_2 dispersion, 40 g of absolute ethanol, 0.5 g of commercial CeO₂ powder and 7.8 g of tetraethyl-orthosilicate solution were mixed together and kept under vigorous stirring at 398K for one hour. Then, the mixture was cooled down to room temperature, the volume adjusted to 500mL by distilled water addition and further maintained under stirring for 12 hours. Subsequently, still under stirring the temperature was increased at 348K and pH kept constant at a value of 6.0 (±0.2) by a drop-wise addition of a 0.4M NaOH solution. After that, 8,85g of 35 wt.% zirconyl nitrate solution was added and pH varied at the value of 8.0 (±0.2), causing the formation of an opaque gel that yielded a soft-yellow precipitate. Then, the filtered material was washed with H₂O and further with a diluted sulforic acid solution, dried at 333K for 30 minutes and calcined at 393K for 2 hours.

Properties of the obtained compositions are detailed in table 3 hereinafter:

**Table 3**

| i.d. | Active phase | | carrier | | | S.A.^{a} (m²/g) | <D>^{b} (nm) |
|---|---|---|---|---|---|---|---|
| | type | load | CeO₂ | SiO₂^{c} | ZrO₂ ^{d} | | |
| Hyf_6 | H_ion_2 | 12.9% | 10.0% | 44.0% | 33.0% | 50 | 5 |

a: Specific Surface Area determined by N₂ physisorption according to B.E.T. method; determinations have been carried out on samples pre-treated under vacuum at 403K until a residual pressure of less than 10 ⁻² mbar; b: average pore diameter determined by capillary condensation of N₂, according to B.J.H calculation model model; c: silica obtained by in-situ precipitation of tetraethyl-orthosilicate; d: zirconia obtained by in-situ precipitation of zirconyl nitrate.

**Catalyst testing**

The fluoropolymer compositions and the reference materials were tested for their catalytic performances in the dimethylether (DME) synthesis via methanol dehydration, according to the following reaction:

2 CH₃OH→ CH₃OCH₃ + H₂O.

The lab-scale plant used for the test was equipped with electronic mass flow controllers from Brooks Instruments (DDE Smart Series 2000) for feeding reactants mixture; feeding lines were kept at 150°C for avoiding partial condensation of liquid reactants, via thermocouples electronically controlled. Reactor was made of a jacketed AISI 316 stainless steel pipe having inner diameter of 4 mm; inner pressure was controlled via a back-pressure system.
Analysis of stream fed and withdrawn was carried out via on-line gas-chromatographic analysis.
Thus, a catalyst sample of 0.2 g diluted in 0.2 g of carborundum (CSi) powder were introduced in a plug flow reactor operating at 200°C and 1 atm, wherein a methanol gas reaction mixture comprising 5 % moles of methanol in helium was allowed to flow at a gas flow rate of 40 stp ml/min. This flow rate corresponded to a gas hourly space-time velocity (GHSV) of 0.90 h⁻¹.
Reactants and products were analyzed by gas chromatography using a HP5890 chromatographer equipped with a three-column analytical set. Permanent gases were detected by a Thermal Conductivity Detector (TCD), while hydrocarbons were identified and quantified by a Flame Ionization Detector (FID).

Results of catalytic runs are summarized in the following tables; table 4 summarizes data obtained for NAFION^{®} fluoropolymer-based compositions, whilst table 5 pertains to results obtained with HYFLON^{®} fluoropolymer-based compositions.

**Table 4**

| run | catalyst | Reaction rate¹ | Site Time Yield² | Catalyst productivity³ | Fluoropolymer productivity⁴ |
|---|---|---|---|---|---|
| 1 | Naf_2 | 0.0021 | 23.3 | 245 | 2450 |
| 2 (comp) | Naf_4 | 0.0016 | 18.0 | 176 | 1355 |
| 3 (comp) | SAC-13 | 0.0015 | n.a.⁵ | 292 | 2247 |
| 4 (comp) | Bare SiO₂ | < 0.0001 | < 0.15 | < 0.9 | n.a.⁵ |
| 5 (comp) | Bare CeO₂ | < 0.0001 | < 0.15 | < 0.9 | n.a.⁵ |
| 6 | Naf_1 | 0.0042 | 17.2 | 499 | 1919 |
| 7 (comp) | Naf_3 | 0.0036 | 13.0 | 410 | 1366 |

| | | | | | |
|---|---|---|---|---|---|
| 1: reaction rate expressed as molₘₑₜₕₐₙₒₗ·g_{catalyst} ⁻¹·s⁻¹; 2: site time yield, corresponding to the moles of methanol converted per equivalent of proton exchangeable per second, expressed as molₘₑₜₕₐₙₒₗ·eq (H⁺)⁻¹·s⁻¹; 3: catalyst productivity expressed as g_{DME}·kg_{catalyst} ⁻¹·h⁻¹; 4: fluoropolymer productivity expressed as g_{DME}·kg_{polymer}⁻¹·h⁻¹; 5: n.a. = not applicable. | | | | | |

Data of table 4 here above clearly demonstrate the superiority of compositions comprising a cerium compound over corresponding compositions having similar functional NAFION^{®} fluoropolymer load (roughly 10 to 13 % wt), but including silica as carrier, either prepared by impregnation or commercially available (see performances of Naf_2 catalyst, as compared to those of Naf_4, supported on silica, and SAC-13, commercial silica-supported catalyst).
Same is true also for catalysts having higher fluoropolymer load: see comparison between run 6 and run 7, based on NAFION^{®} fluoropolymer composition either supported on ceria (Naf_1) or on silica (Naf_3) at a polymer load from 26 to 30 % wt.

Data obtained also confirmed that neither silica nor ceria possess *per se,* i.e. as bare materials, any catalytic activity in dimethylether (DME) synthesis.

**Table 5**

| run | catalyst | Reaction rate¹ | Site Time Yield² | Catalyst productivity³ | Fluoropolymer productivity⁴ |
|---|---|---|---|---|---|
| 8 (comp) | H_ion_2⁵ | 0.0007 | 4.2 | n.a.⁶ | 688 |
| 9 | Hyf_1 | 0.0041 | 30.0 | 492 | 4915 |
| 10 (comp) | Hyf_4 | 0.0035 | 23.3 | 398 | 3316 |
| 11 | Hyf_6 | 0.0070 | 39.0 | 781 | 6011 |
| 12 | Hyf_2 | 0.0043 | 23.1 | 567 | 3542 |
| 13 | Hyf_3 | 0.0057 | 18.0 | 714 | 2972 |
| 14 (comp) | Hyf_5 | 0.0044 | 14.8 | 505 | 2105 |

| | | | | | |
|---|---|---|---|---|---|
| 1: reaction rate expressed as Mol_{methanol·}g_{catalyst} ⁻¹·s⁻¹; 2: site time yield, corresponding to the moles of methanol converted per equivalent of proton exchangeable per second, expressed as molₘₑₜₕₐₙₒₗ·eq (H⁺)⁻¹·s⁻¹; 3: catalyst productivity expressed as g_{DME}.kg_{catalyst} ⁻¹·h⁻¹; 4: fluoropolymer productivity expressed as g_{DME}.kg_{polymer} ⁻¹·h^{-1;} 5: Unsupported HYFLON^{®} fluoropolymer H_ion_2 powder, obtained by slow solvent evaporation of diluted (5 wt %) solution, physically mixed with inert carborundum (CSi) to obtain a fluoropolymer concentration in the mixture of 12 % wt; 6: n.a. = not applicable. | | | | | |

As expected, the functional fluoropolymer, when used as unsupported catalyst, only exhibits weak catalytic activity.
At a functional fluoropolymer load of roughly 10 % wt, compositions comprising HYFLON^{®} fluoropolymer and ceria (run 9) exhibited substantially improved catalytic performances than corresponding system based on silica (comparative run 10). Catalytic behaviour of ceria-comprising composition could be further improved by addition of other inorganic carrier/promoters, as shown in run 11, wherein the functional fluoropolymer has been impregnated on a support comprising ceria and in-situ precipitated silica and zirconia. Increasing fluoropolymer load (run 12 and 13) on ceria support increased reaction rate and catalyst productivity; highly loaded silica-based composition (see comparative run 14) did not enable achieving similar performances.

It is also to be outlined that catalytic runs carried out in otherwise strictly similar conditions have shown HYFLON^{®} functional fluoropolymer materials to possess higher catalytic activity than corresponding NAFION^{®} fluoropolymer counterparts (compare run 1 and 9).

## Claims

1. A fluoropolymer composition (C) comprising:
- at least one functional fluoropolymer [polymer (I)], said polymer comprising : - recurring units derived from at least one ethylenically unsaturated monomer comprising at least one fluorine atom (fluorinated monomer, hereinafter); and - a substantial amount of recurring units derived from at least one ethylenically unsaturated monomer comprising at least one cation exchange group (functional monomer, hereinafter); and- at least one cerium compound [compound (O)].

2. The fluoropolymer composition of claim 1, wherein the functional monomer is chosen among :
**(M1)** sulfonated perfluoroolefin of formula (M1) : 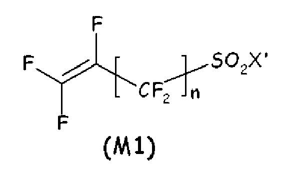 wherein n is an integer between 0 and 6 and X' is chosen among halogens (Cl, Fl, Br, I), -O-M⁺, wherein M⁺ is a cation selected among H⁺, NH₄ ⁺, K⁺, Li⁺, Na⁺, or mixtures thereof; **(M2)** sulfonated perfluorovinylethers of formula (M2) : 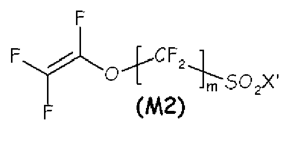 wherein m is an integer between 1 and 10 and X' is chosen among halogens (Cl, Fl, Br, I), -O⁻M⁺, wherein M⁺ is a cation selected among H⁺, NH₄ ⁺, K⁺, Li⁺, Na⁺, or mixtures thereof; **(M3)** sulfonated perfluoroalkoxyvinylethers of formula (M3) : 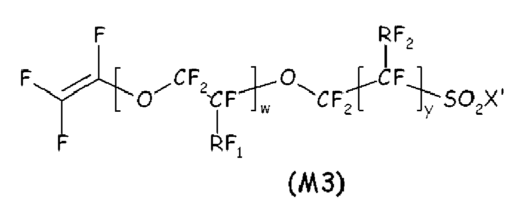 wherein w is an integer between 0 and 2, RF₁ and RF₂, equal or different from each other and at each occurrence, are independently -F, -Cl or a C₁₋₁₀ perfluoroalkyl group, optionally substituted with one or more ether oxygens, y is an integer between 0 and 6 and X' is chosen among H, halogens (Cl, FI, Br, I), -O⁻M⁺, wherein M⁺ is a cation selected among H⁺, NH₄ ⁺, K⁺, Li⁺, Na⁺, or mixtures thereof; **(M4)** perfluoroalkoxyvinylether carboxylates of formula (M4) : 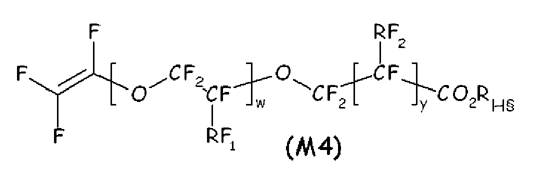 wherein w, y, RF₁ and RF₂ have the same meaning as above defined, and R_{H§} is a C₁₋₁₀ alkyl or fluoroalkyl group; **(M5)** sulfonated aromatic (per)fluoroolefins of formula (M5): 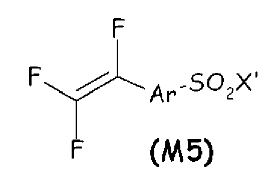 wherein Ar is a C₃₋₁₅ aromatic or heteroaromatic moiety and X' is chosen among halogens (Cl, Fl, Br, I), -O⁻M⁺, wherein M⁺ is a cation selected among H ⁺, NH₄ ⁺, K⁺, Li⁺, Na⁺, or mixtures thereof; and **(M6)** mixtures thereof.

3. The fluoropolymer composition according to anyone of claim 1 or 2, wherein the polymer (I) is a functional per(halo)fluoropolymer consisting essentially of :
- recurring units derived from one or more than one ethylenically unsaturated monomer comprising at least one fluorine atom and free from hydrogen atoms (per(halo)fluoromonomer); and - recurring units derived from one or more than one ethylenically unsaturated monomer comprising at least one fluorine atom and at least one cation exchange group, and free from hydrogen atoms (except those optionally comprised in the cation exchange group) (functional per(halo)fluoromonomer).

4. The fluoropolymer composition of claim 3, wherein polymer (I) is a functional per(halo)fluoropolymer comprising recurring units derived from at least one functional per(halo)fluoromonomer and at least one per(halo)fluoromonomer chosen among :
- C₃-C₈ perfluoroolefins, preferably tetrafluoroethylene (TFE) and/or hexafluoropropylene (HFP); - chloro- and/or bromo- and/or iodo-C₂-C₆ per(halo)fluoroolefins, like chlorotrifluoroethylene (CTFE) and/or bromotrifluoroethylene; - perfluoroalkylvinylethers (PAVE) complying with formula CF₂=CFOR_{f1} in which R_{f1} is a C₁-C₆ perfluoroalkyl, e.g. -CF₃, -C₂F₅, -C₃ F₇; - perfluoro-oxyalkylvinylethers complying with formula CF₂=CFOX₀, in which X₀ is a C₁-C₁₂ perfluorooxyalkyl having one or more ether groups, like perfluoro-2-propoxy-propyl.

5. The fluoropolymer composition of claim 4, wherein polymer (I) is selected among TFE copolymers comprising :
- from 5 to 20 % by moles of recurring units derived from (perfluoro-2-(2-fluorosulfonylethoxy)propylvinyl ether) (PSEPVE) and/or perfuoro-5-sulphonylfluoride-3-oxa-1-pentene (SFVE), in their -SO₂F or-SO₂X" form, wherein X" is chosen among halogens (Cl, Br, I), -O⁻M⁺, wherein M⁺ is a cation selected among H⁺, NH₄⁺, K⁺, Li⁺, Na⁺, or mixtures thereof; and - from 95 to 80 % by moles of recurring units derived from tetrafluoroethylene (TFE).

6. The fluoropolymer composition according to anyone of the preceding claims, wherein the cerium compound is chosen among cerium oxides [CeO₂; Ce₂O₃], ceric fluoride (CeF₄), ceric sulphate [Ce(SO₄)₂], ceric ammonium nitrate {(NH₄)₂ [Ce(NO₃)₆]}, ceric ammonium sulphate {(NH₄)₂[Ce(SO₄)₃]}, ammonium hexachlorocerate {(NH₄)₂[CeCl₆]}, basic cerous carbonate [Ce(OH)CO₃], cerous hydroxide [Ce(OH)₃], cerous carbonates [Ce₂(CO₃)₃·*n*H₂O], cerous oxy-carbonate [Ce₂O₂(CO₃)], cerous phosphate, cerous fluoride [CeF₃], cerous oxyfluoride [CeOF], cerous sulphate [Ce₂(SO₄)₃], cerium sulphide [Ce₂S₃], cerium oxysulfide [Ce₂O₂S] cerous nitrate [Ce(NO₃)₃·6H₂O], cerous chloride [CeCl₃], cerous oxychloride [CeOCI], cerous bromide [CeBr₃], and mixture thereof.

7. The fluoropolymer composition according to claim 6, wherein the cerium compound is chosen among CeO₂ (ceria), Ce₂O₃, and mixtures thereof.

8. A process for the manufacture of the fluoropolymer composition (C) according to anyone of the preceding claims.

9. Use of the composition according to anyone of claims 1 to 7 as catalyst.
